# EUROPÄISCHE PATENTANMELDUNG

(11) **EP 0 532 978 A1**
(43) Veröffentlichungstag der Anmeldung: **24.03.1993**
(21) Anmeldenummer: 92114963.9
(22) Anmeldetag: 02.09.1992
(51) Int. Cl.: B65G 47/84, B65G 47/71, B07C 5/36

(54) **Kastenausstossvorrichtung**

(30) Priorität: 18.09.1991 DE 4131037
(71) Anmelder: Rexing, Günter, D-45307 Essen (DE)
(72) Erfinder: Rexing, Günter, D-45307 Essen (DE)
(74) Vertreter: Spalthoff, Adolf, Dipl.-Ing.

(57) **Zusammenfassung**

Eine Kastenausstoßvorrichtung hat ein bewegbares Schiebeteil (15), mittels dem ein Kasten (25) od.dgl. quer zur Förderrichtung eines Förderers (22) verschiebbar ist, einen ersten Ausleger (14), über den der eine Endabschnitt des Schiebeteils (15) mit einem ersten Zahnrad (11) verbunden ist, einen zweiten Ausleger (17), der parallel zum ersten Ausleger angeordnet ist und über den der andere Endabschnitt des Schiebeteils (15) mit einem zweiten Zahnrad (12) verbunden ist, wobei die beiden Zahnräder (11, 12) zur Verstellung des Schiebeteils (15) mittels einer beide Zahnräder (11, 12) umgreifenden Kette (10) antreibbar sind, die durch eine Antriebsstation (1, 6) angetrieben wird.

Um auch die Abtrennung zweier aufeinanderfolgender Kästen aus einem dichten Kastenstrom zu ermöglichen, hat die Kastenausstoßvorrichtung ein zweites Schiebeteil (19), mittels dem ein Kasten (25) od.dgl. quer zur Förderrichtung des Förderers (22) verschiebbar ist, einen dritten Ausleger (18), über den der eine Endabschnitt des zweiten Schiebeteils (19) mit dem einen Endabschnitt des ersten Schiebeteils (15) verbunden ist, und einen vierten Ausleger (20), der parallel zum dritten Ausleger (18) angeordnet ist und über den der andere Endabschnitt des zweiten Schiebeteils (19) mit dem anderen Endabschnitt des ersten Schiebeteils (15) verbunden ist, wobei beide Schiebeteile (15, 19) bei einer vollen Umdrehung der Zahnräder (11, 12) eine volle Kreisbewegung ausführen und auf der von ihnen durchlaufenen Kreisspur diametral zueinander angeordnet sind.

## Beschreibung

Die Erfindung bezieht sich auf eine Kastenausstoßvorrichtung mit einem bewegbaren Schiebeteil, mittels dem ein Kasten od. dgl. quer zur Förderrichtung eines Förderers verschiebbar ist, einem ersten Ausleger, über den der eine Endabschnitt des Schiebeteils mit einem ersten Zahnrad verbunden ist, einem zweiten Ausleger, der parallel zum ersten Ausleger angeordnet ist und über den der andere Endabschnitt des Schiebeteils mit einem zweiten Zahnrad verbunden ist, wobei die beiden Zahnräder zur Verstellung des Schiebeteils mittels einer beide Zahnräder umgreifenden Kette antreibbar sind, die durch eine Antriebsstation angetrieben wird.

Eine solche Kastenausstoßvorrichtung ist neben einem Förderer angeordnet, auf dem Kästen an ihr vorbeigefördert werden, von denen einige zu separieren sind, weil sie unvollständig gefüllt oder mit anderen Flaschen gefüllt oder aus irgendwelchen anderen Gründen von den anderen Kästen abgetrennt werden müssen. Mittels einer Steuervorrichtung wird an die Antriebsstation eine Mitteilung gemacht, wenn ein Kasten quer zur Förderrichtung des Förderers verschoben werden muß. Wenn der Kasten den Bereich der Kastenausstoßvorrichtung erreicht, werden mittels der Antriebsstation die beiden Zahnräder gedreht, so daß das Schiebeteil der Kastenausstoßvorrichtung, welches sich bei einer Umdrehung der Zahnräder kreisförmig in einer zur Förderebene parallelen Ebene bewegt, zu Beginn der Kreisbewegung mit dem Kasten in Anlage gerät und diesen in fortschreitender Kreisbewegung immer weiter quer zur Förderrichtung versetzt und schließlich aus dem Bereich des Förderers hinausstößt. Danach läuft das Schiebeteil unter Beschreibung einer zu der bereits beschriebenen symmetrischen Halbkreisbewegung in seine Ausgangsstellung zurück, wo es dann bereitsteht, um den nächsten auszusondernden Kasten quer zum Förderer zu versetzen.

Insbesondere wenn in dichter Aufeinanderfolge Kästen an der Kastenausstoßvorrichtung vorbeilaufen und wenn zwei aufeinanderfolgende Kästen aus dem Kastenstrom zu separieren sind, ist es zuweilen unumgänglich, die Fördergeschwindigkeit des Förderers herabzusetzen, um die beiden auszusondernden Kästen aus dem Kastenstrom zu entfernen, da die Zeit, die für die Kastenausstoßvorrichtung nach dem Separieren des ersten Kastens zur Verfügung steht, um wieder ihre Ausgangsposition einzunehmen, bei normaler Förderergeschwindigkeit zu kurz ist. Alternativ zu einer Verlangsamung der Förderergeschwindigkeit könnte der geschilderten Kastenausstoßvorrichtung eine weitere Kastenausstoßvorrichtung parallel geordnet werden, die in solchen Fällen in Betrieb gesetzt würde. Im Falle der Verlangsamung der Förderergeschwindigkeit ergeben sich Kapazitätseinbußen der Gesamtanlage, im Falle der Parallelschaltung einer zweiten Kastenausstoßvorrichtung ergibt sich eine beträchtliche Erhöhung des konstruktiven und wirtschaftlichen Aufwands.

Der Erfindung liegt die Aufgabe zugrunde, die gattungsgemäße Kastenausstoßvorrichtung derart weiterzubilden, daß bei minimalem konstruktiven Aufwand seitens der Kastenvorrichtung und ohne Einschränkungen der Geschwindkeit des Förderers auch unmittelbar aufeinanderfolgende Kästen aus einem engen Kastenstrom ausscheidbar sind.

Diese Aufgabe wird erfindungsgemäß dadurch gelöst, daß die Kastenausstoßvorrichtung ein zweites Schiebeteil, mittels dem ein Kasten od.dgl. quer zur Förderrichtung des Förderers verschiebbar ist, einen dritten Ausleger, über den der eine Endabschnitt des zweiten Schiebeteils mit dem einen Endabschnitt des ersten Schiebeteils verbunden ist, und einen vierten Ausleger aufweist, der parallel zum dritten Ausleger angeordnet ist und über den der andere Endabschnitt des zweiten Schiebeteils mit dem anderen Endabschnitt des ersten Schiebeteils verbunden ist, wobei beide Schiebeteile bei einer vollen Umdrehung der Zahnräder eine volle Kreisbewegung ausführen und auf der von ihnen durchlaufenen Kreisspur diametral zueinander angeordnet sind. Hierdurch wird gewährleistet, daß das zweite Schiebeteil in dem Augenblick seine Ausgangsposition zum Ausstoßen eines Kastens einnimmt, wenn das erste Schiebeteil gerade die erste Halbkreisbewegung zum Ausstoß eines Kastens beendet hat. Während nun im Anforderungsfall das zweite Schiebeteil einen zu separierenden Kasten ausstößt und dabei die entsprechende erste Halbkreisbewegung ausführt, vollführt das erste Schiebeteil die zweite Halbkreisbewegung, mittels der es in die Ausgangsstellung, d.h. in die Bereitschaftsstellung zum Ausstoßen eines Kastens, zurückgeführt wird. Somit ist durch eine konstruktiv einfache Erweiterung der Kastenausstoßvorrichtung gewährleistet, daß mittels einer einzigen Kastenausstoßvorrichtung auch in einem schnellen Kastenstrom unmittelbar aufeinanderfolgende Kästen aus diesem Kastenstrom separiert werden können.

Sofern die Antriebsstation für die beiden die Schiebeteile antreibenden Zahnräder einen Motor und ein 2:1-Untersetzungsgetriebe aufweist, kann jede Umdrehung einer Motorausgangswelle einer Bewegung der Schiebeteile um jeweils einen Halbkreis entsprechen. Wenn somit die Umdrehung der Motorausgangswelle hinsichtlich der Drehgeschwindigkeit entsprechend gesteuert wird, ist es möglich, daß sich das die Ausstoßbewegung vollführende Schiebeteil zunächst langsam, dann, nach Kontakt mit dem auszustoßenden Kasten, schneller und nach Ausstoßen des Kastens wieder mit sinkender Geschwindigkeit bewegt.

In zuverlässiger Weise läßt sich eine derart gesteuerte Halbkreisbewegung des Schiebeteils erreichen, wenn ein Antriebszahnrad exentrisch auf der Motorausgangswelle und ein Eingangszahnrad des Untersetzungsgetriebes exzentrisch und ein Ausgangszahnrad des Untersetzungsgetriebes zentrisch auf einer Getriebewelle sitzen. Bei dieser Anordnung wird das Eingangszahnrad des Untersetzungsgetriebes mit einer sich ändernden Geschwindigkeit gedreht, wobei die Exzentrizität so gewählt ist, daß bei Beginn der Umdrehung das Eingangszahnrad des Untersetzungsgetriebes verhältnismäßig langsam gedreht wird, es dann erheblich beschleunigt wird und es nach dieser Beschleunigungsphase wieder verzögert wird. Am Ende dieser Verzögerungsphase des Eingangszahnrads des Untersetzungsgetriebes befindet sich dann dasjenige Schiebeteil, welches soeben eine Ausstoßbewegung zur Abtrennung eines Kastens durchgeführt hat, am Ende der ersten Halbkreisbewegung. Durch die genannte Steuerung der Geschwindigkeit des Schiebeteils wird erreicht, daß sich das Schiebeteil verhältnismäßig langsam an den abzutrennenden Kasten annähert, so daß beim Aufprall des Schiebeteils auf den Kasten dieser und sein Inhalt nicht beschädigt werden.

Sofern eine das motorseitige Antriebszahnrad und das untersetzungsgetriebeseitige exzentrische Eingangszahnrad umgreifende Kette mittels eines Kettenspannrads vorgespannt wird, kann ein zuverlässiger Betrieb der Antriebsstation gewährleistet werden, weil die Exzenter die Kettenlängung gegenseitig aufheben und somit dann ein Abspringen der Kette aufgrund der Geschwindigkeitsschwankungen und der demgemäß auftretenden Kräfteschwankungen verhindert werden kann.

Die Exzentrizität des Antriebszahnrads wird so gewählt, daß bei einer Umdrehung der Motorausgangswelle die das Antriebszahnrad und das exzentrische Eingangszahnrad umgreifende Kette zunächst mit einer geringen, dann mit einer schnell ansteigenden und dann mit einer abfallenden Geschwindigkeit bewegt wird, so daß die Schiebeteile, die während einer vollen Umdrehung der Motorausgangswelle um 180 Grad auf ihrer Kreisspur wandern, während einer Halbkreisbewegung, mit der sie einen Kasten quer zur Förderrichtung des Förderers bewegen, zunächst sehr langsam, nach Anlagekontakt mit dem Kasten mit einer schnell ansteigenden Geschwindigkeit und nach dem Lösen vom Kasten mit einer abfallenden Geschwindigkeit bewegt werden.

Im folgenden wird die Erfindung an Hand einer Ausführungsform unter Bezugnahme auf die Zeichnung näher erläutert.

Es zeigen:
- Figur 1: eine Draufsicht auf die erfindungsgemäße Kastenausstoßvorrichtung, die an einem Förderer angeordnet ist;
- Figur 2: eine Seitenansicht der Kastenausstoßvorrichtung; und
- Figur 3: eine schematische Skizze zur Erläuterung des Bewegungsablaufs der Kastenausstoßvorrichtung.

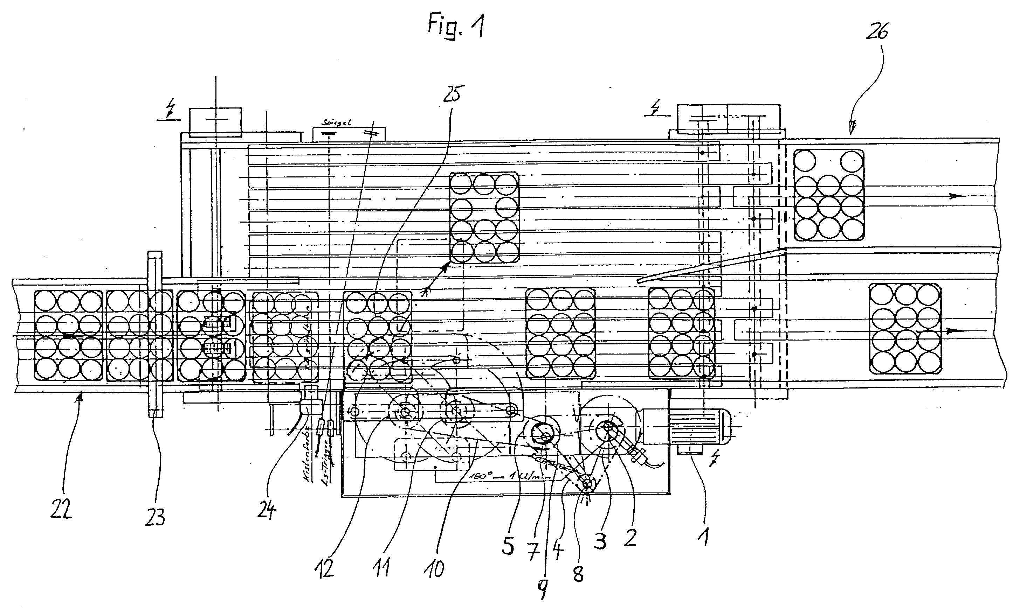

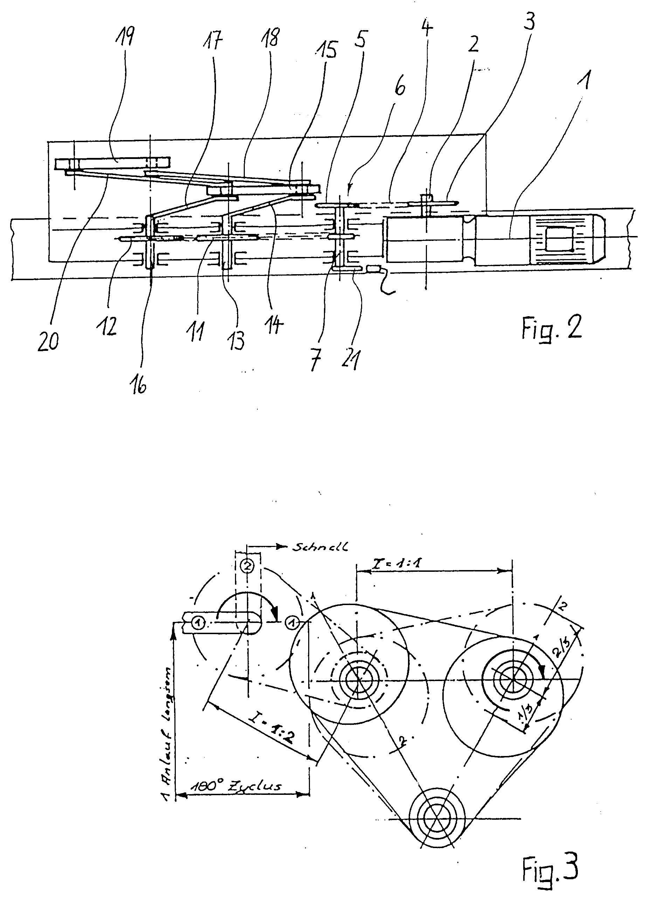

Eine in den Figuren 1 und 2 dargestellte Kastenausstoßvorrichtung hat einen Motor 1, auf dessen Motorausgangswelle 2 ein exzentrisches Antriebszahnrad 3 sitzt. Das Antriebszahnrad 3 ist über eine Kette 4 mit einem exzentrischen Eingangszahnrad 5 eines 2:1-Untersetzungsgetriebes 6 verbunden. Das 2:1-Untersetzungsgetriebe 6 und der Motor 1 bilden die Antriebsstation der Kastenausstoßvorrichtung.

Das Eingangszahnrad 5 des 2:1-Untersetzungsgetriebes 6 sitzt ebenfalls exzentrisch auf einer Getriebewelle 7 des 2:1-Untersetzungsgetriebes.

Zum Ausgleich der sich bei Drehung der Motorausgangswelle ergebenden Geschwindigkeits- und Beanspruchungsschwankungen umläuft die Kette 4 außer dem motorseitigen Antriebszahnrad und dem untersetzungsgetriebeseitigen Eingangszahnrad noch ein Kettenspannrad 8, welches die Kette im Leertrumm ausgleicht.

Auf der Getriebewelle 7 des 2:1-Untersetzungsgetriebes 6 sitzt zentrisch ein Ausgangszahnrad 9, dessen Durchmesser entsprechend dem Untersetzungsverhältnis des Untersetzungsgetriebes 6 ausgewählt ist.

Das Ausgangszahnrad 9 des 2:1-Untersetzungsgetriebes 6 treibt über eine Kette 10 ein erstes und ein zweites Zahnrad 11, 12 der Kastenausstoßvorrichtung. Die das Zahnrad 11 tragende Welle 13 ist über einen ersten Ausleger 14 mit einem Endabschnitt eines ersten Schiebeteils 15 verbunden. Das zweite Zahnrad 12 sitzt auf einer Welle 16, die über einen zweiten Ausleger 17 mit dem anderen Endabschnitt des ersten Schiebeteils 15 verbunden ist. An dem einen Endabschnitt des ersten Schiebeteils 15 ist ein dritter Ausleger 18 angebracht, der mit dem einen Endabschnitt eines zweiten Schiebeteils 19 verbunden ist. An dem anderen Endabschnitt des ersten Schiebeteils 15 ist ein vierter Ausleger 20 angebracht, der mit seinem anderen Ende an dem anderen Endabschnitt des zweiten Schiebeteils 19 befestigt ist.

Bei einer Drehung des ersten Zahnrads 11 und des zweiten Zahnrads 12 werden, wie sich aus den Punkt-Strich-Linien um die genannten Zahnräder 11, 12 in Figur 1 ergibt, die beiden Schiebeteile 15 und 19 auf einer gestreckten Kreisbahn um die beiden Zahnräder 11, 12 bewegt, wobei aufgrund der Führung durch die Ausleger 14 und 17 bzw. 18 und 20 die Schiebeteile 15, 19 stets parallel zueinander gehalten werden. Die beiden Schiebeteile 15, 19 sind auf der von ihnen beschriebenen Kreisspur diametral zueinander angeordnet.

Am 2:1-Untersetzungsgetriebe 6 wird eine Schaltfahne 21 vorgesehen, die die End- bzw. Anfangsstellung der Schiebeteile 15, 19 überwacht.

Wenn auf einem Förderer 22 ein Kasten an die Kastenausstoßvorrichtung herangefördert wird, der aus dem Förder- bzw. Kastenstrom ausgeschieben werden muß, wird dies von einer üblichen Überwachungseinrichtung 23 erfaßt. Sofern die Kästen nach ihrer Farbe sortiert werden müssen, kann hierzu auch eine geeignete optische Einrichtung 24 dienen.

Auf die Steuerung des Motors 1 der Antriebsstation der Kastenausstoßvorrichtung wird ein entsprechendes Signal gegeben. Hierdurch wird bewirkt, daß, sobald der Kasten den Bereich der Kastenausstoßvorrichtung erreicht, der Motor 1 eine Umdrehung ausführt. Hierdurch wird über das Antriebszahnrad 3 des Motors 1, die Kette 4, das Eingangszahnrad 5 des 2:1-Untersetzungsgetriebes 6, dessen Ausgangszahnrad 9 und die Kette 10 eine Drehung des ersten Zahnrads 11 und des zweiten Zahnrads 12 um 180 Grad bewirkt. Durch diese Drehung der beiden Zahnräder 11, 12 wird das in der Ausgangsposition befindliche Schiebeteil, sei es das erste Schiebeteil 15 oder das zweite Schiebeteil 19, aus der Ausgangsposition, wie sie in Figur 1 dargestellt ist, mit einer verhältnismäßig geringen Geschwindigkeit gegen den auszuscheidenen Kasten 25 bewegt. Nachdem das Schiebeteil 15, 19 gegen den Kasten 25 anliegt, beschleunigt sich die Bewegung des Schiebeteils 15, 19 erheblich, so daß der Kasten 25 vom Förderer 22 auf den Förderer 26 gestoßen wird. Wenn das gerade in Betrieb befindliche Schiebeteil 15, 19 seitlich den Bereich des Förderers 22 verlassen hat, befindet sich das andere Schiebeteil 19, 15 in der Ausgangsstellung, aus der heraus es - bei Bedarf - den nächsten Kasten aus dem Förderstrom ausscheiden könnte.

In Figur 3 ist dargestellt, wie aufgrund der Exzentrizität des Antriebszahnrads 3 auf der Motorausgangswelle 2 die unterschiedliche Geschwindigkeit der schiebeteile 15, 19 erreicht wird. Trotz einer konstanten Drehgeschwindigkeit der Motorausgangswelle 2 bei einer Umdrehung ergibt sich hieraus der bei der Halbkreisbewegung eines Verschiebeteils 15, 19 vorstehend beschriebene Geschwindigkeitsverlauf.

## Patentansprüche

1. Kastenausstoßvorrichtung mit einem bewegbaren Schiebeteil (15), mittels dem ein Kasten (25) od.dgl. quer zur Förderrichtung eines Förderers (22) verschiebbar ist, einem ersten Ausleger (14), über den der eine Endabschnitt des Schiebeteils (15) mit einem ersten Zahnrad (11) verbunden ist, einem zweiten Ausleger (17), der parallel zum ersten Ausleger (14) angeordnet ist und über den der andere Endabschnitt des Schiebeteils (15) mit einem zweiten Zahnrad (12) verbunden ist, wobei die beiden Zahnräder (11, 12) zur Verstellung des Schiebeteils (15) mittels einer beide Zahnräder (11, 12) umgreifenden Kette (10) antreibbar sind, die durch eine Antriebsstation (1, 6) angetrieben wird, gekennzeichnet durch ein zweites Schiebeteil (19), mittels dem ein Kasten (24) od.dgl. quer zur Förderrichtung des Förderers (22) verschiebbar ist, einen dritten Ausleger (18), über den der eine Endabschnitt des zweiten Schiebeteils (19) mit dem einen Endabschnitt des ersten Schiebeteils (15) verbunden ist, und einen vierten Ausleger (20), der parallel zum dritten Ausleger (19) angeordnet ist und über den der andere Endabschnitt des zweiten Schiebeteils (19) mit dem anderen Endabschnitt des ersten Schiebeteils (15) verbunden ist, wobei beide Schiebeteile (15, 19) bei einer vollen Umdrehung der Zahnräder (11, 12) eine volle Kreisbewegung ausführen und auf der von ihnen durchlaufenen Kreisspur diametral zueinander angeordnet sind.

2. Kastenausstoßvorrichtung nach Anspruch 1, bei der die Antriebsstation einen Motor (1) und ein 2:1-Untersetzungsgetriebe (6) aufweist.

3. Kastenausstoßvorrichtung nach Anspruch 1 oder 2, bei der ein Antriebszahnrad (3) exzentrisch auf einer Motorausgangswelle (2) sitzt.

4. Kastenausstoßvorrichtung nach Anspruch 3, bei der ein Eingangszahnrad (5) des Untersetzungsgetriebes (6) exzentrisch und ein Ausgangszahnrad (9) des Untersetzungsgetriebes (6) zentrisch auf einer Getriebewelle (7) sitzen.

5. Kastenausstoßvorrichtung nach Anspruch 4, bei der eine das motorseitige Antriebszahnrad (3) und das untersetzungsgetriebeseitige Eingangszahnrad (5) umgreifende Kette (4) mittels eines Kettenspannrades (8) vorgespannt ist.

6. Kastenausstoßvorrichtung nach einem der Ansprüche 3 - 5, bei der die Exzentrizität des Antriebszahnrads (3) so gewählt ist, daß bei einer Umdrehung der Motorausgangswelle (2) die das Antriebszahnrad (3) und das Eingangszahnrad (5) umgreifende Kette (4) zunächst mit einer geringen, dann mit einer schnell ansteigenden und dann mit einer abfallenden Geschwindigkeit bewegt wird, so daß die Schiebeteile (15, 19), die während einer vollen Umdrehung der Motorausgangswelle (2) um 180 Grad auf ihrer Kreisspur wandern, während einer Halbkreisbewegung, mit der sie einen Kasten (25) quer zur Förderrichtung des Förderers (22) bewegen, zunächst sehr langsam, nach Anlagekontakt mit dem Kasten (25) mit einer schnell ansteigenden Geschwindigkeit und nach dem Lösen vom Kasten (25) mit einer abfallenden Geschwindigkeit bewegt werden.
